# EUROPEAN PATENT APPLICATION

(11) **EP 1 376 290 A1**
(43) Date of publication of application: **02.01.2004**
(21) Application number: 02425392.4
(22) Date of filing: 17.06.2002
(51) Int. Cl.: G05D 23/02

(54) **Temperature-actuated shut-off valve for sanitary and hydraulic installations**

(71) Applicant: Ergon S.r.l., 13018 Valduggia (Vercelli) (IT)
(72) Inventor: Mazzola, Giovanni Maria, 13018 Valduggia (Vercelli) (IT)
(74) Representative: Valentini, Giuliano

(57) **Abstract**

Described herein is a safety device for hydraulic and sanitary systems wherein there are provided actuator means for instantaneously bringing a shutter of a valve from the open position to the closed position when the temperature of the fluid reaches a pre-set value.

## Description

The present invention relates to a safety device for hydraulic and sanitary systems and, in particular, a device capable of stopping the flow of water during delivery in the case where the temperature of the water delivered increases beyond a pre-set value.

In the field of plumbing, in addition to the well-known thermostatic taps that enable adjustment of the temperature of the water delivered, there are already known safety devices that enable to stop the flow of the water delivered in the case where the temperature thereof exceeds a pre-set threshold.

Some examples of known devices are described in US Patent No. 4480784 and International Patent Application No. WO-01/21323. In general, each device comprises a valve assembly with a mobile shutter and temperature-sensitive means capable of actuating the shutter to close it in the case where the temperature detected is higher than a pre-set value.

These known devices have been proposed with the aim of preventing injury to persons in the form of burns due to sudden increases in the temperature of the water delivered. However, the time for intervention of these known devices is still too long because the shutter is brought gradually into the closed position, and hence the stop of the flow of water at high temperature occurs only after a certain length of time after the pre-set threshold temperature has been exceeded. For this reason, they are not able to guarantee total safety from burns in all possible cases.

In fact, it is necessary to bear in mind that particularly sensitive skin, such as the skin of small children, may suffer serious burns even in the case of very short exposure (approximately 3 seconds) to water at temperatures of between 40 °C and 50 °C.

The task of the present invention is hence to provide a safety device for hydraulic and sanitary systems that allow the drawbacks of the prior art to be overcome.

In the above context, an object of the present invention is to provide a safety device that allow instantaneous stop of water delivery in the case where the temperature thereof exceeds a pre-set threshold.

Another object of the present invention is to provide a device as mentioned above, which also allow automatic resumption of the delivery of water after the temperature thereof has dropped below a pre-set value.

A further object of the present invention is to provide a device which is easy to install even in already existing systems and possibly provided with regulation of temperature.

The above objects are achieved by the present invention, which relates to a safety device for hydraulic and sanitary systems of the type comprising at least one valve assembly for shutting off supply of a fluid during delivery, the valve assembly having at least one shutter which can be moved between an open position and a closed position, and at least one automatic actuator member that is sensitive to temperature, characterised by comprising actuator means for bringing the shutter instantaneously from the open position to the closed position when the temperature of the fluid reaches a pre-set value, as well as for automatically bringing the shutter gradually back into the open position when the temperature of the fluid drops below the pre-set value.

In practice, the shutter switches immediately into the closed position as soon as the temperature of the jet of water, delivered for example by a tap or by a shower, reaches a pre-set value. The instantaneous stop of the jets of water at high temperature thus enables prevention of the danger of possible burns.

The automatic actuator member that is sensitive to temperature is constituted preferably by a thermostatic bulb, and even more preferably by a precision thermostatic bulb, mounted on the valve assembly.

To enable the automatic resumption of delivery, there is provided at least one bypass passage, with reduced flow rate, for discharging the water shut off by the valve assembly when the shutter is in the closed position. As a result, a limited "dripping" takes place, which enables any water at high temperature that may be in contact with the thermostatic bulb to be emptied off and to get water at a lower temperature to come into contact with the thermostatic bulb.

In addition, there is advantageously provided at least one threaded coupling for adjusting the temperature at which the actuator means brings the shutter instantaneously from the open position to the closed position. It is thus possible to vary within certain limits, for example between 45 °C and 50 °C, the operating temperature of the safety device.

Further characteristics and advantages of the present invention will become more clear from the following description, with reference to the annexed schematic drawings, in which:
- Figure 1 is a cross-sectional view of a pipe in which a safety device is inserted according to a possible embodiment of the present invention;
- Figure 2 is a view, in a non-assembled condition, of some components of the safety device of Figure 1;
- Figure 3 is a view, in non-assembled condition, of other components of the safety device of Figure 1;
- Figure 4 is an enlarged cross-sectional view that is a partial illustration of the safety device with the shutter in the open position;
- Figure 5 is an enlarged cross-sectional view that is a partial illustration of the safety device with the shutter once again in the open position, but with the actuator means in the activation phase; and
- Figure 6 is an enlarged cross-sectional view that is a partial illustration of the safety device with the shutter in the closed position.

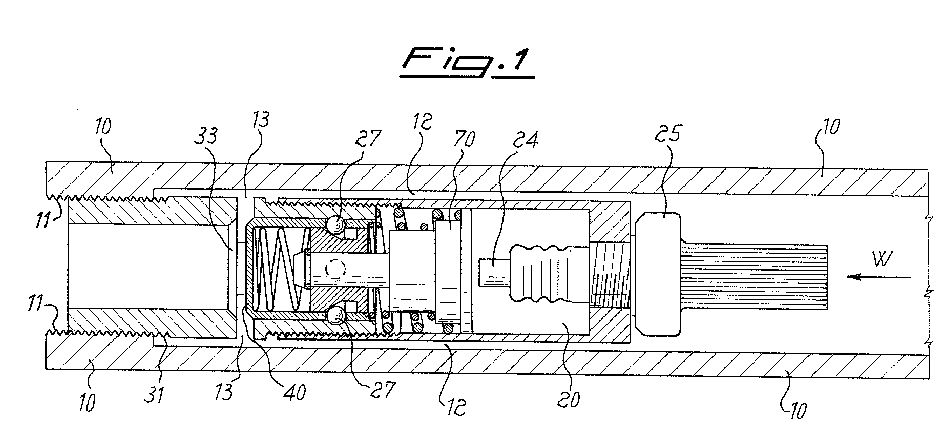

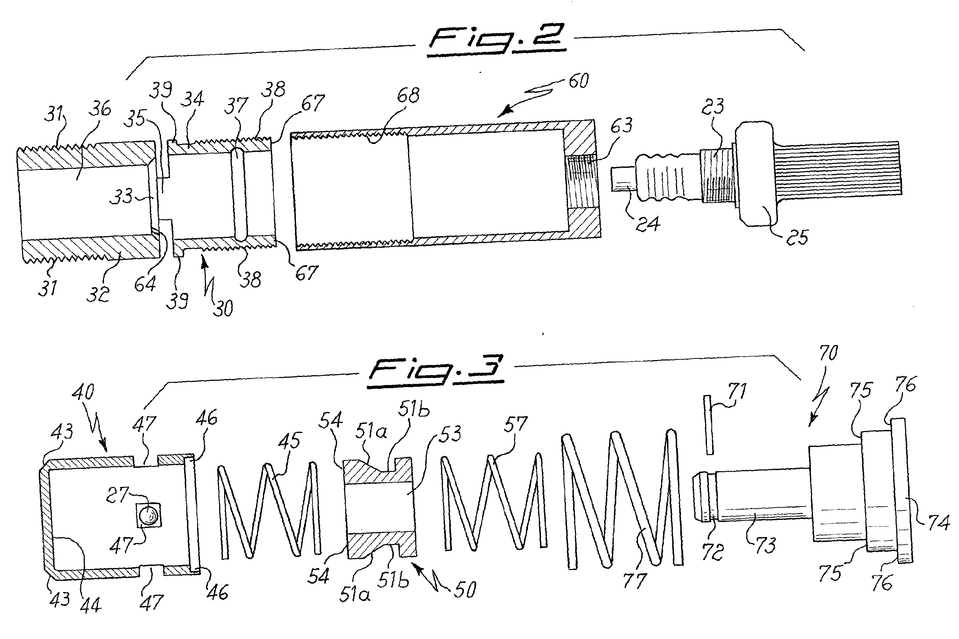

In the pipe 10 represented in Figure 1, there is coaxially inserted a safety device 20 according to a possible embodiment of the invention. The assembly is made in this case by means of a threaded coupling between the end portion 31 of the device 20 and an internally threaded portion-11 of the pipe 10.

The shape, the dimensions, and the type of assembly of the device 20 in the pipe 10 are provided merely by way of example, i.e., the safety device 20 may be mounted, for example, in a pipe fitting for the water during delivery, or else in the pipe present inside the grip of a shower head or the like.

The arrow W indicates the direction of the flow of water delivered through the pipe 10. The incoming water laps a thermostatic bulb 25, and passes through a gap 12 present between the device 20 and the internal wall of the pipe 10 until it reaches the chamber 13 in the area corresponding to the valve seat 33 and the shutter 40.

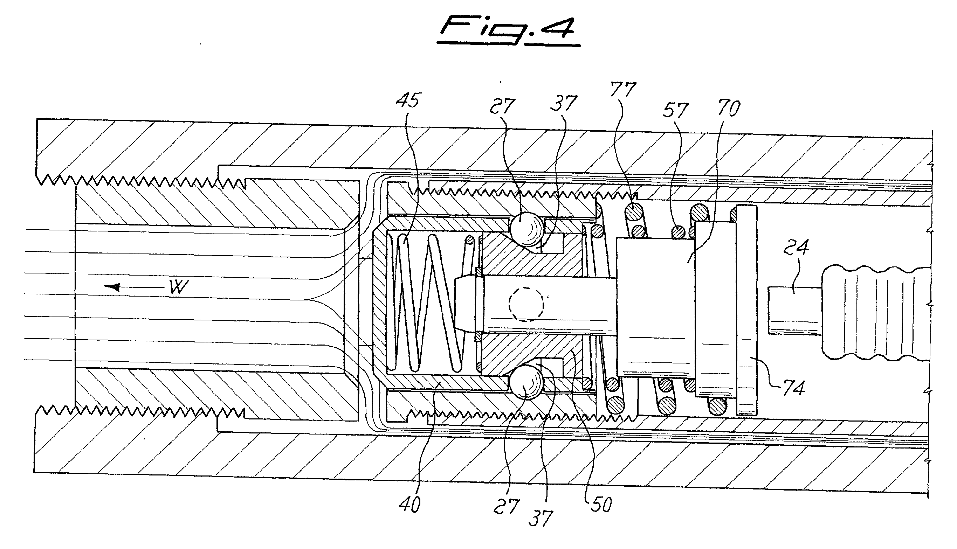

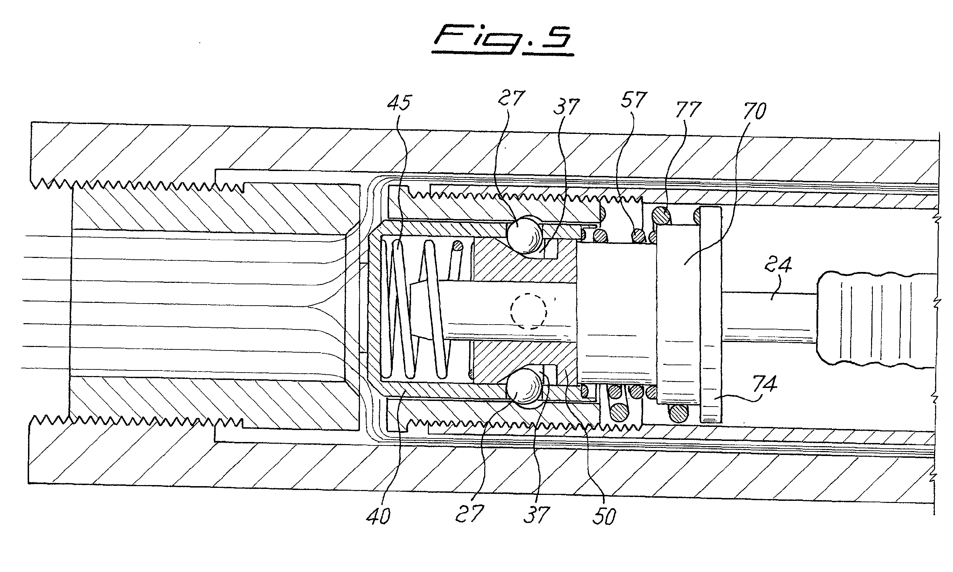

In the view of Figure 1, the safety device 20 is illustrated in its inactive condition, i.e. in the condition in which the temperature of the water delivered is lower than a pre-set value of intervention of the device. In this condition, the shutter 40 is kept in the open position by means of balls 27 housed in appropriate seats 47 (Figure 3) of the shutter 40 and engaged each in a corresponding seat, for example a circumferential groove 37 (see Figure 2) made in the body 30 of the valve assembly.

The thermostatic bulb 25 comprises a mobile rod 24 acting on a piston 70 of the safety device 20. In the condition represented in Figure 1, with the temperature of the water below the activation temperature of the safety device 20, the mobile rod 24 is set at a distance from the piston 70.

Represented in Figure 2 are some components of the safety device 20 of Figure 1 in the non-assembled condition. Illustrated, in particular, are the valve body 30, the valve cap 60 and the already mentioned thermostatic bulb 25.

The valve body 30 is made of a single piece and comprises a first substantially cylindrical portion 32 and a second substantially cylindrical portion 34 joined together by one or more columns 35. The latter are set at angular distances apart to provide ports for passage of the water towards the valve seat 33 and the outlet 36.

Made on the first substantially cylindrical portion 32 of the body 30 is the external thread 31, which is used for fixing the device to the pipe 10. The first portion 32 further comprises the valve seat 33, upon which the shutter 40 bears during closing.

The second substantially cylindrical portion 34 of the body 30 comprises, inside it, the circumferential groove 37, in which the balls 27 engage for withholding the shutter 40 in the open position. On the outside of the second substantially cylindrical portion 40 there is a thread 38 for coupling with a corresponding thread 68 made inside the valve cap 60.

On the second substantially cylindrical portion there is further provided a flange 39 designed to be engaged by a tool for enabling assembly and removal of the device 20 from the pipe 10. The flange 39 may have, for example, a hexagonal shape or be provided with notches so as to enable engagement by means of a corresponding socket spanner, or else may have other suitable shapes to enable rotation of the valve body 30 by means of a specific tool.

In addition to the internal thread 68, the valve cap 60 comprises a through hole 63, within which is inserted the portion of the thermostatic bulb 25 comprising the mobile rod 24. The fixing of the thermostatic bulb 25 may, for example, be made by means of a threaded coupling between an externally threaded portion 23 of the bulb and an internal thread made in the through hole 63 of the valve cap 60. As an alternative to the embodiment represented, the thermostatic bulb 25 may also be fixed to the valve cap 60 by means of other known means, such as, for example, elastic means capable of maintaining the bulb always inserted in the hole 63 but even so compliant for compensating possible excesses of thrust exerted by the mobile rod 24 on the piston 70.

Figure 3 illustrates other components of the safety device 20 of Figure 1, in particular the shutter 40, the piston 70, an element 50 for moving the balls 27, and a number of helical springs that guarantee operation of the safety device 20.

The shutter 40 is of a substantially cylindrical shape and comprises a front part 43, which has a shape and dimensions that are complementary to the valve seat 33 present in the valve body 30.

On the front part 43 of the shutter 40, or else on the valve seat 33, there is preferably made at least one groove of particularly limited section for forming at least one bypass passage with a reduced flow rate. An example of a groove of this kind made in the valve seat 33 is designated by the reference number 64 in Figure 2.

This allows discharging of the water shut off by the valve assembly of the device 20 when the shutter 40 is in the closed position and hence enables faster resumption of operation of the device by gradual emptying any water at a high temperature that may still be present in contact with the thermostatic bulb 25. Even with the shutter closed, there consequently occurs a very limited residual dripping that may easily be avoided and that may hence not be considered dangerous. As already anticipated, the shutter 40 comprises seats 47 designed to house an equal number of balls 27. In the embodiment represented, there are provided four seats 47 set at equal angular distances apart and four balls 27 housed therein, but the number of seats 47 and balls 27 may also be different provided that proper operation of the device 20 is guaranteed.

For example, even just one ball 27 may be used if appropriate guide means are provided for guaranteeing the sliding of the shutter 40 and of the element 50 for moving the balls, as well as two or more balls 27 arranged in positions that may even not be at equal angular distances apart.

The element 50 for moving the balls comprises a through axial hole 53 for enabling its assembly on the pin portion 73 of the piston 70. A retaining ring 71 is inserted in a corresponding groove 72 of the pin portion 73 in such a way that, during resumption of operation of the safety device 20, the piston 70 can exert a pull on the element 50 for moving the balls.

In the assembled condition, the element 50 is housed coaxially inside the shutter 40, with interposition of a first helical spring 45 acting in an axial direction. The spring 45 is inserted between the internal bottom wall 44 of the shutter 40 and the front surface 54 of the element 50.

On the outside of the element 50 for moving the balls there is provided at least one cam surface 51 a, 51b, which has at least one inclined section 51 a and a section 51b parallel to the axis, the said cam being in contact with the balls 27 when the device 20 is in the assembled condition.

The element 50 provided with the cam surface 51 a, 51 b constitutes, in practice, an axial cam capable of enabling disengagement of the balls 27 from the groove 37 during instantaneous activation of the safety device 20, as well as of guiding the balls themselves again towards the position of engagement in the groove 37 during the gradual resumption of operation of the device.

In addition to the pin portion 73, the piston 70 further comprises a cap 74, upon which the mobile rod 24 of the thermostatic bulb 25 bears, and at least one pair of shoulders 75 and 76, upon which the other springs provided in the device 20 bear.

A second helical spring 57, also acting in an axial direction; is in fact set between the piston 70 and the shutter 40, with the ends of the spring 57 bearing upon the shoulder 75 of the piston 70 and the seat 46 made in the shutter 40.

A third helical spring 77, which like the previous ones acts in an axial direction, is set between the piston 70 and the valve body 30, with the ends of the spring 77 bearing upon the shoulder 76 of the piston 70 and the front surface 67 of the valve body 30.

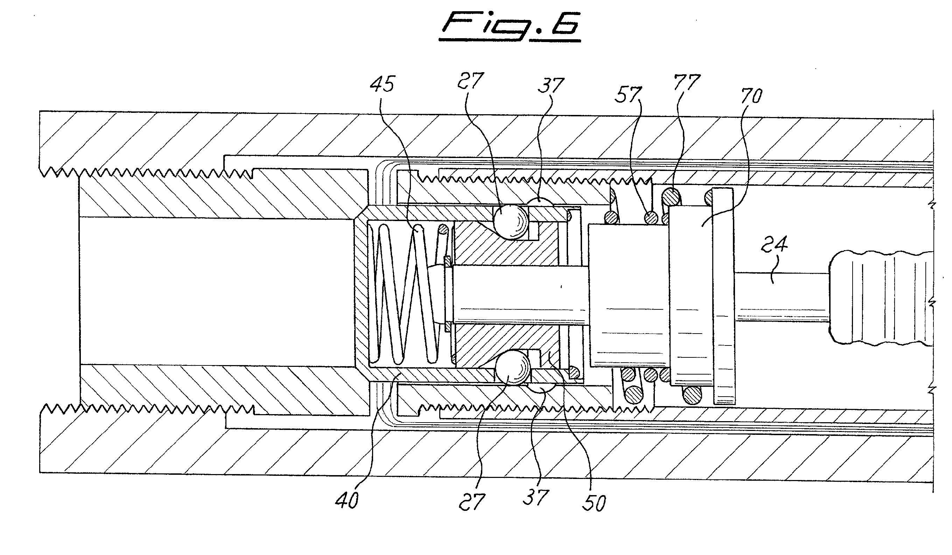

Illustrated in what follows is the operation of the safety device according to the invention, with reference to the enlarged views of Figures 4 to 6.

Represented in Figure 4 is the safety device in the same condition already illustrated in Figure 1, i.e., the condition in which the temperature is below the pre-set value of intervention of the device. The mobile rod 24 of the thermostatic bulb is set at a distance from the cap 74 of the piston 75, and the springs 57 and 77 bearing upon the piston 70 are substantially unloaded.

In this condition, the shutter 40 is withheld in the open position by means of the balls 27 engaged in the groove 37. The balls 27 are in turn kept engaged in the groove 37 by the element for moving them 50, which receives the thrust from the pre-loaded spring 45. The water, the lines of flow of which are shown, runs freely in the pipe 11 and around the device in the direction indicated by the arrow W.

Represented in Figure 5 is the initial phase of intervention of the safety device. The rise in the temperature of the water up to the pre-set temperature brings the mobile rod 24 of the thermostatic bulb up against the cap 74 of the piston 70. The latter, in addition to loading the spring 77, exerts a thrust on the element 50 and moreover loads the spring 57 acting on the shutter 40.

The thrust exerted by the spring 57 on the shutter 40 causes the latter to tend to draw along with it the balls 27 housed therein and to remove them from engagement with the groove 37, whilst the simultaneous displacement of the element 50 under the thrust of the piston 70 causes the balls 27 to return towards'the section of the cam surface, which runs parallel to the axis of the element 50.

The balls 27 are thus released from engagement in the groove 37, and the shutter switches instantaneously into its closed position, as represented in Figure 6.

In this position, as already illustrated previously, there is in any case ensured a slight leakage through a passage, obtainable for example by means of a groove 64 like the one shown in Figure 2, for freeing the thermostatic bulb 25 from the water at high temperature, which would otherwise keep the device blocked with the shutter in the closed position for a long time.

When the temperature of the water in the area corresponding to the thermostatic bulb decreases, the mobile rod 24 starts to return inside the bulb itself, and the spring 77, which is loaded, starts to push the piston 70 backwards. Also the spring 57 contributes to a minor extent in exerting an initial thrust on the piston 70, but this does not constitute its prevalent function.

In fact, before the retaining ring 71 (Figure 3) returns into position so that it bears upon the element 50, and hence before the said element 50 can be drawn backwards by the movement of the piston 70, the shutter 40 is, in any case, still kept in the closed position principally under the thrust exerted by the spring 57 and, in part, under the thrust exerted by the spring 45.

This guarantees that the resumption of operation of the safety device occurs at a temperature that is certainly lower than that of intervention, for example lower by 10-20 °C than the operating temperature.

When the retaining ring 71 returns into position so that it bears upon the surface of the element 50, the piston 70, as it moves back, draws along with it also the element 50, thus bringing the balls 27 back, and hence the shutter 40, into their initial position represented in Figure 4 (or in Figure 1), with the balls once again engaged in the groove 37 and kept engaged under the thrust of the spring 45.

Regulation of the operating temperature of the device may be achieved by acting on one or more of the threaded couplings of the device itself, for example by adjusting the screwing between the threads 38 and 68, respectively, of the valve body 30 and of the valve cap 60, or else between the threads 63 and 23, respectively, of the valve cap 60 and the thermostatic bulb 25.

It will be appreciated that the axial arrangement of the mobile components of the device according to the invention enables a particularly compact embodiment of the device and its installation in various types of pipes.

In addition, the safety device according to the present invention may be effectively used also downstream of the thermostatic taps already installed for preventing any possible malfunctioning or errors of setting thereof.

## Claims

1. A safety device for hydraulic and sanitary systems, of the type comprising at least one valve assembly for shutting off a fluid during delivery, said valve assembly having at least one shutter movable between an open position and a closed position, and at least one automatic actuator member that is sensitive to temperature, **characterised by** comprising actuator means for bringing said shutter instantaneously from said open position to said closed position when the temperature of said fluid reaches a pre-set value, as well as for automatically bringing said shutter back gradually into said open position when the temperature of said fluid drops below said pre-set value.

2. A device according to Claim 1, wherein said shutter can be moved in an axial direction inside the body of said valve assembly.

3. A device according to Claim 1, wherein said actuator means comprise one or more balls, which are housed in corresponding seats of said shutter and can be engaged in a removable way in at least one groove made in the body of said valve assembly when said shutter is in said open position.

4. A device according to Claim 3, wherein said actuator means comprise at least one element for moving said one or more balls which is housed in said shutter and which can be moved axially inside the latter, said moving element being provided with at least one cam surface in contact with said one or more balls.

5. A device according to Claim 4, wherein there is provided at least one first elastic means, which acts in an axial direction between said moving element and said shutter and which is housed inside the latter.

6. A device according to Claim 4, wherein said actuator means comprise at least one piston movable in an axial direction and which has at least one drawing portion which acts on said moving element for bringing said shutter from said closed position to said open position.

7. A device according to Claim 1, wherein said actuator means comprise at least one piston movable in an axial direction and which has at least one thrust portion which acts on said shutter through at least one second elastic means for displacing said shutter from said open position to said closed position.

8. A device according to Claim 1, wherein said temperature-sensitive automatic actuator member is constituted by a thermostatic bulb mounted on said valve assembly.

9. A device according to Claim 7 or 8, wherein the mobile rod of said thermostatic bulb acts in an axial direction on said piston.

10. A device according to Claim 7, wherein there is provided at least one third elastic means which acts in an axial direction between the body of said valve assembly and said piston.

11. A device according to Claim 1, wherein there is provided at least one bypass passage with reduced flow rate for discharging the water shut off by said valve assembly when said shutter is in the closed position.

12. A device according to Claim 1, wherein there is provided at least one threaded coupling for adjusting the temperature at which said actuator means bring said shutter instantaneously from said open position to said closed position.
